Europäisches Patentamt

European Patent Office

Office européen des brevets

(19)

(11) EP 1 358 805 A1

(12) **EUROPEAN PATENT APPLICATION**

(43) Date of publication:
**05.11.2003 Bulletin 2003/45**

(51) Int Cl.⁷: $A23K\ 1/00$, $A23K\ 1/16$

(21) Application number: **02356081.6**

(22) Date of filing: **30.04.2002**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **AVENTIS ANIMAL NUTRITION S.A.
92160 Antony (FR)**

(72) Inventors:
• **Dollat, Jean-Marie
03100 Montlucon (FR)**
• **Robert, Jean-Claude
03310 Neris les Bains (FR)**

(74) Representative: **Guerre, Dominique
Cabinet Germain et Maureau,
BP 6153
69466 Lyon Cedex 06 (FR)**

(54) **Animal feed supplement**

(57)     An animal feed supplement in the solid form said feed supplement comprising 2-hydroxy-4-(methylthio) butanoic acid or an ester thereof and a porous carrier material wherein the 2-hydroxy-4-(methylthio) butanoic acid or ester thereof accounts for at least 20% by weight of the total composition of the feed supplement.

EP 1 358 805 A1

**Description**

The present invention relates to a novel animal feed supplement.

Methionine is a well known additive for animal feed, in particular for ruminants. Methionine may be added directly to the animal feed. The free form of this compound however is degraded rapidly by bacteria in the rumen and consequently only a small portion of the original methioinine is able to enter the bloodstream. An analogue of methionine is also often used, namely the hydroxy analogue having the chemical name 2-hydroxy-4-(methylthio) butanoic acid, generally referred to as HMB. This product is used in the liquid form and is also largely degraded in the rumen.

A commercially known product sold as Smartamine sold by Aventis Animal Nutrition is effective in providing methionine to the animal and tests have shown that the methionine enters the blood stream in 10 hours after administration. Recent research has also shown that ceratin esters of methionine or HMB may also be successfully used to provide the necessary bio-available methionine to ruminants. WO 00/28835 discloses the use of the ester form of the hydroxy analogue and in particular this document teaches that at least 50% of bio-available methionine may be provided through the administration of the iso propyl ester of the hydroxy analogue of methionine.

We have now found that when the hydroxy methionine analogue, and in particular the iso propyl ester, is provided in the solid form and admixed with the animal feed, the product shows good bioavalable results at least equivalent to the liquid form.

Accordingly, the present invention provides an animal feed supplement in the solid form said feed supplement comprising 2-hydroxy-4-(methylthio) butanoic acid or an ester thereof and a porous carrier material wherein the 2-hydroxy-4-(methylthio) butanoic acid or ester thereof accounts for at least 20% by weight of the total composition of the feed supplement.

The present invention provides the advantage over the previously known animal feed supplements in that the use of the particular feed supplement not only provides a large amount of methionine to the animal but that methionine is found to be present in the bloodstream after a short period of time when compared to the commercially available methionine sources.

The present invention provides an animal feed supplement that is in the solid form. For the purposes of the present invention solid form is defined as powder wherein the particles or granules of powder have a size range of from 200 to 400 microns.

The feed supplement of the present invention comprise 2-hydroxy-4-(methylthio) butanoic acid or an ester thereof. Suitable esters include linear or branched alkyl esters such as methyl ester, ethyl ester, n-propyl ester, isopropyl ester, butyl esters, namely n-butyl ester, sec butyl ester, isobutyl ester and tertiary butyl ester, pentyl esters and hexyl esters, especially n-pentyl, isopentyl, n-hexyl and isohexyl esters.

Preferably, the ester is a branched alkyl ester, especially the isopropyl ester and the tertiary butyl ester. In particular, it has been found that a solid feed supplement comprising the isopropyl ester of the hydroxy analogue of methioinine displays a bio-availability of methionine of more than 50%.

The 2-hydroxy-4-(methylthio) butanoic acid or the ester thereof accounts for at least 20% by weight of the total feed composition. Suitably, this compound is present in an amount of from 20 to 70% by weight, preferably from 25 to 50% by weight.

The feed supplement of the present invention comprise a porous carrier material. Suitably the carrier material has a porosity of at least 0.25 ml/g, preferably from 0.4 to 2.0 ml/g. Suitable carrier materials include clays such as vermiculite, sepiolite and perlite clays; silicates and silica such as magnesium silicates and zeolites. The preferred material is a clay, especially sepiolite, commercially available as Exal-H.

The granule may comprise additional components such as an anti-caking agent, an anti-oxidising agent and a surfactant. Anti-caking agents suitable for use in the present invention include silicas, talcum, calcium phosphate, calcium carbonate and magnesium stearate. The preferred anti-caking agent is a compound having a high surface area, for example at least 100 m2/g. Preferably, the anti-caking agent is silica. The ant-caking agent is suitable present in an amount of from 0 to 2% by weight.

As regards the anti-oxidising agent, suitable agents include tocopherol, ascorbic acid, ethoxyquine, propyl, octyl or dodecyl gallate, butyl hydroxy anisole (commonly referred to as BHA) and butylated hydroxytoluene (commonly referred to as BHT). The anti-oxidant may be present in the solid in an amount of from 0 to 3% by weight of the granule.

Surfactants suitable for use in the present invention include sulphates such as sodium alkyl sulphate or lauryl sulphate, polysorbates such as polyoxy ethylene sorbitol fatty acid esters. The surfactant is present in an amount of from 0 to 5% by weight.

The granule may contain water although it is preferred that the granule is essentially dry. The water content may be from 0 to 10 % by weight.

A particularly preferred granule of the present invention comprises 25 to 30% by weight of the isopropyl ester of the hydroxy analogue of methionine, and 75 to 70% of sepiolite.

The solid particle may suitably have an average medium diameter of from 200 to 400 microns, preferably from 275 to 325 microns and a bulk density suitably of from 700 to 950 kg/m$^3$, preferably from 800 to 900 kg/m$^3$

The feed supplement of the present invention may be prepared by impregnation of the carrier material with the liquid methionine containing product optionally followed by addition of the ant-caking agent. This procedure may be carried out by mixing the components using any suitable blender or mixer. The mixing may be carried out at a temperature of from 20 to 80°C, preferably from 40 to 70 °C. The speed of mixing will be determined by the desired size of the resulting powder. Alternatively, the mixing may be carried out in a fluidised bed.

The feed supplement of the present invention may be incorporated into the food of the animal and according to another aspect of the present invention there is provided an animal feed comprising a feed supplement as herein before defined.

The present invention will now be described in detail with reference to the following examples:

In the following preparative work, the following standard tests were carried out on the solid supplement:

1. Particle Size: The size of the solid particle was determined by passing 100g of the granules through Retsch sieves with 1.5 mm of amplitude during a period of 10 minutes.

2. Bulk and Tapped Density: The bulk and tapped density were determined by powder volumenometer (230ml).

3. Carr Index - This index is defined as :

$$(\text{Bulk Density- Tapped Density})/\text{Bulk Density}$$

4. Flow Index: The flow Index was determined by a flow tester which is the ring shear stress of Schulze (device reference RST-01.01 Dr Ing. Dietmar Schulze, Wolfenbuttel, Germany). Jenike Index is defined by the ratio of principal stress at a steady flow to the unconfined yield strength.

Example 1: Preparation of Feed Supplement Containing 2-hydroxy-4-(methylthio) butanoic acid

A weight of 35kg of sepiolite clay (70 weight %) was placed in a 130 litres Lodige plow mixer. The clay was stirred for five minutes. 15kg of liquid 2-hydroxy-4-(methylthio) butanoic acid (30weight %) was heated to 60°C and then poured into the mixer at a flow rate of 1000kg/hour. The resulting mixture was homogenised for 20 minutes.

The size, the bulked and tapped density, Carr Index and Flow Index of the resulting granules were determined according to the aforementioned procedures. The results are given in Table 1:

Example 2: Preparation of Feed Supplement Containing the iso propyl ester of 2-hydroxy-4-(methylthio) butanoic acid (HMBI Supported on Sepiolite Clay)

A weight of 27kg of sepiolite clay (70 weight %) was placed in a 130 litres Lodgie plow mixer. The clay was stirred for five minutes. 11.6kg of the liquid isopropyl ester of 2-hydroxy-4-(methylthio) butanoic acid (30weight %) was poured into the mixer at a flow rate of 36kg/hour. The resulting mixture was homogenised for 20 minutes.

The size, the bulked and tapped density, Carr Index and Flow Index of the resulting granules were determined according to the aforementioned procedures. The results are given in Table 2:

Example 3: Preparation of Feed Supplement Containing the iso propyl ester of 2-hydroxy-4-(methylthio) butanoic acid (HMBI Supported on Sepiolite Clay)

A weight of 0.22kg of sepiolite clay (70 weight %) was placed in an Aeromatic fluidized bed. Gas was allowed to flow through the bed. The clay was suspended in the gas flow for 5 minutes. 0.11kg of liquid isopropyl ester of 2-hydroxy-4-(methylthio) butanoic acid (30weight %) was sprayed through a nozzle positioned at the top of the bed. The spraying procedure was allowed to continue for 10 minutes. Fluidisation of the bed was allowed to continue for a further five minutes thereafter. The gas flow was ten discontinued.

320g of powdered product was collected and divided by a Retsch device into 8 portions of 40g. Each portion was then divided into 8 further portions of 5g for stability measurement

The stability of the solid product was determined by measuring the amount of hmbi in the solid product after production (0 days) and after 15, 45 and 90 days The solid material was kept under ambient conditions throughout the test period. The level of hmbi remained constant throughout the test period indicating good stability of the feed supplement. The results are given in Table 3.

Table 1

| Characteristic | |
|---|---|
| **HMB expected theoretical amount** | 26.4 |
| **HMB amount measured** | 27.4 |
| **Size distribution**<br>$D_{10}$ (μm)<br>$D_{50}$ (μm)<br>$D_{90}$ (μm) | sieve<br>150<br>340<br>530 |
| % > 630 μm | 1.8 |
| % < 100 μm | 0.3 |
| **Porosity**<br>Total porous volume ($cm^3/g$)<br>Residual intraparticular porous volume ($cm^3/g$)<br>Diameter of interparticular pores (μm) | 0.51<br>0.18<br><br>93 |
| **Calculated particle density** ($g/cm^3$) | 1.44 |
| **Bulk powder density** ($g/cm^3$) | 0.84 |
| **Tapped powder density** ($g/cm^3$) | 0.94 |
| **Carr index** | 12% |
| **Flowing index ( annular cell)** | 23 |

Table 2

| Characteristic | Batch 1 | Batch 2 |
|---|---|---|
| HMBI expected theoretical amount | 27.6 | 27.6 |
| HMBI amount measured par dosage HPLC | 28.4 | 26.3 |
| Size distribution | Sieve | Sieve |
| $D_{10}$ (µm) | 167 | 164 |
| $D_{50}$ (µm) | 344 | 356 |
| $D_{90}$ (µm) | 529 | 563 |
| % > 630 µm | 1.6 | 2.1 |
| % < 100 µm | 1.9 | 1.7 |
| Porosity | | |
| Total porous volume ($cm^3/g$) | 0.38 | 0.38 |
| Residual intraparticular porous volume ($cm^3/g$) | 0.09 | 0.10 |
| Powder porosity (%) | 42% | 42% |
| Diameter of interparticular pores (µm) | 67 | 73 |
| Calculated particle density ($g/cm^3$) | 1.44 | 1.42 |
| Bulk powder density ($g/cm^3$) | 0.89 | 0.87 |
| Tapped powder density ($g/cm^3$) | 0.95 | 0.93 |
| Carr index | 7% | 7% |
| Flowing index ( annular cell) | 20 | 19 |

Table 3

| Amount | Batch |
|---|---|
| HMBI (theoretical) | 30.7% |
| HMBI (0 days) | 31.0 % |
| HMBI (15 days) | 29.8% |
| HMBI (45 days) | 31.2% |
| HMBI (90 days) | 31.4% |

Bio-availability Tests

The solid feed supplement containing HMBI prepared according to Example 3 above comprising 30% HMBI and 70% sepiolite clay was added to a feed ration and given to 4 dry cows over a period of 7 days at two different daily doses. A similar study was carried out using liquid HMBI (Comparative Example 1) and the commercially known product Smartamine (Solid form - Comparative Example 2). The amount of feed supplement in each case was calculated to provide 50g of either methionine-equivalent (HMB), in the case of the solid and liquid powdered HMBI or methionin ein the case of Smartamine.

The feed supplement was introduced into the normal feed ration once per day. Blood samples were taken every half hour for the first two hours following administration of the feed and then every two hours thereafter for the Example 1 and Comparative Example 1 and every two hours in Comparative Example 2

The concentration of methionine in the blood was measured and plotted . the area under the curve was calculated to give the bio-availability results. The feed supplement according to the present invention provided 56% bio-available methionine. The liquid hmbi feed supplement provided 49% bio-avaialble methionine. Smartamine provided 82% bio-available methionine. The liquid and solid hmbi feed supplements resulted in methionine absorption into the bloodstream within 2 hours after intake whilst for Smartamine, methionine was detected after 10 hours. resulted in methionine.

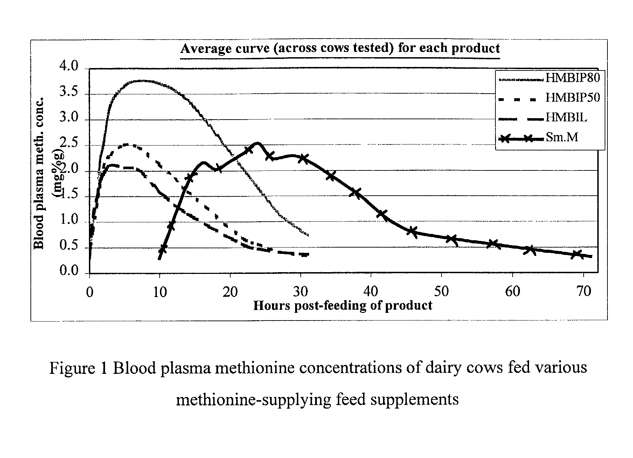

The results are plotted in Figure 1 where:

HMBIP80 is solid HMBI fed at a dose providing 80g methionine-equivalent (or HMB) per cow per day ("P" stands for powder).

HMBIP50 is solid HMBI fed at a dose providing 50g methionine-equivalent (HMB) per cow per day

HMBIL is liquid HMBI fed at a dose providing 50g methionine-equivalent (HMB) per cow per day (L = liquid)

Sm.M is Smartamine M, fed at a dose providing 50 g methionine per cow per day.

Also:

- HMBI is the abbreviation for "isopropyl ester of 2-hydroxy-4 (methylthio) butanoic acid".
- HMB is the abbreviation for " 2-hydroxy-4 (methylthio) butanoic acid".

**Claims**

1. An animal feed supplement in the solid form said feed supplement comprising 2-hydroxy-4-(methylthio) butanoic acid or an ester thereof and a porous carrier material wherein the 2-hydroxy-4-(methylthio) butanoic acid or ester thereof accounts for at least 20% by weight of the total composition of the feed supplement.

2. A feed supplment as claimed in claim 1 in which the 2-hydroxy-4-(methylthio) butanoic acid or an ester thereof is present in an amount of from 20 to 40% by weight.

3. A feed supplement as claimed in claim 1 or claim 2 in which the ester is a linear or branched alkyl ester selected from methyl ester, ethyl ester, n-propyl ester, isopropyl ester, butyl esters, namely n-butyl ester, sec butyl ester, isobutyl ester and tertiary butyl ester, pentyl esters and hexyl esters, especially n-pentyl, isopentyl, n-hexyl and isohexyl esters.

4. A feed supplement as claimed in claim 3 in which the ester is the isopropyl ester or the tertiary butyl ester

5. A feed supplement as claimed in any one of the preceding claims in which the porous carrier material has a porosity of from 0.25 ml/g.

6. A feed supplement as claimed in any one of the preceding claims in which the carrier material is selected from clays such as vermiculite, sepiolite and perlite clays; silicates and silica such as magnesium silicates and zeolites.

7. A feed supplement as claimed in claim 6 in which the carrier material is sepiolite.

8. A feed supplement as claimed in any one of the preceding claims in which the particles have a size range of from 200 to 400 microns.

**9.** An animal feed comprising a feed supplement as claimed in any one of the preceding claims.

Figure 1 Blood plasma methionine concentrations of dairy cows fed various

methionine-supplying feed supplements

**EUROPEAN SEARCH REPORT**

Application Number

EP 02 35 6081

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | G.L. ROMOSER ET AL.: "An evaluation of the L-methionine activity of the hydroxy analogue of methionine" POULTRY SCIENCE, vol. 55, no. 3, 1976, pages 1099-1103, XP001104093 CHAMPAIGN, IL, US ISSN: 0032-5791 * page 1101, column 1 * * page 1102; tables 4,6 * | 1,6,9 | A23K1/00 A23K1/16 |
| Y | | 3,4 | |
| D,Y | WO 00 28835 A (RHONE POULENC ANIMAL NUTRITION) 25 May 2000 (2000-05-25) * page 7, line 6 - line 12 * * claims 1-10,16-20 * | 3,4 | |
| A | US 4 175 121 A (MANTHA NAGARAJA S) 20 November 1979 (1979-11-20) * column 2, line 10 - line 14 * * claims 1,4 * | 1,9 | |
| A | US 3 035 920 A (KNODT CLOY B) 22 May 1962 (1962-05-22) * column 1, line 17 - line 51 * * column 2, line 57 - line 63 * * column 3, line 33 - line 60 * | 1,9 | TECHNICAL FIELDS SEARCHED (Int.Cl.7) A23K |
| A | GB 1 156 010 A (MONSANTO COMPANY) 25 June 1969 (1969-06-25) * page 13; example 2 * * page 14, line 37 - line 43 * | 1,6,9 | |

-/--

The present search report has been drawn up for all claims

| Place of search | Date of completion of the search | Examiner |
|---|---|---|
| THE HAGUE | 17 September 2002 | Dekeirel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 02 35 6081

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | D.J. COTTLE ET AL.: "Overcoming seasonal depression in wool production in Romney Marsh ewes by feed supplementation" PROCEEDINGS OF THE AUSTRALIAN SOCIETY OF ANIMAL PRODUCTION., vol. 19, 1992, pages 135-137, XP001113106 J.A. ROBERTS, MELBOURNE., AU ISSN: 0067-2149 * page 135, paragraph 7 * ----- | 1,9 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 17 September 2002 | Dekeirel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 358 805 A1

## ANNEX TO THE EUROPEAN SEARCH REPORT
## ON EUROPEAN PATENT APPLICATION NO.

EP 02 35 6081

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2002

| Patent document cited in search report | | Publication date | Patent family member(s) | | Publication date |
|---|---|---|---|---|---|
| WO 0028835 | A | 25-05-2000 | FR | 2785772 A1 | 19-05-2000 |
| | | | FR | 2785773 A1 | 19-05-2000 |
| | | | AU | 1385400 A | 05-06-2000 |
| | | | BR | 9915290 A | 07-08-2001 |
| | | | CN | 1326322 T | 12-12-2001 |
| | | | WO | 0028835 A1 | 25-05-2000 |
| | | | EP | 1128738 A1 | 05-09-2001 |
| | | | NO | 20012355 A | 13-07-2001 |
| | | | TR | 200101323 T2 | 21-08-2001 |
| | | | US | 2002103258 A1 | 01-08-2002 |
| | | | US | 6221909 B1 | 24-04-2001 |
| | | | US | 2001008904 A1 | 19-07-2001 |
| US 4175121 | A | 20-11-1979 | NONE | | |
| US 3035920 | A | 22-05-1962 | NONE | | |
| GB 1156010 | A | 25-06-1969 | BE | 686026 A | 27-02-1967 |
| | | | FR | 1601731 A | 14-09-1970 |
| | | | US | 3492398 A | 27-01-1970 |

For more details about this annex : see Official Journal of the European Patent Office, No. 12/82

11